# EUROPEAN PATENT APPLICATION

(11) **EP 1 605 537 A1**
(43) Date of publication of application: **14.12.2005**
(21) Application number: 03782903.3
(22) Date of filing: 25.12.2003
(51) Int. Cl.: H01M 6/18, H01M 10/40, C01B 13/14, C01B 33/12

(54) **INORGANIC OXIDE POWDER FOR USE IN GEL ELECTROLYTE OF BATTERY AND GEL COMPOSITION CONTAINING INORGANIC OXIDE POWDER**

(30) Priority: 27.12.2002 JP 2002379845
(71) Applicant: Nippon Aerosil Co., Ltd., Shinjuku-ku, Tokyo 163-0913 (JP)
(72) Inventor: AMANO, Yuki, c/o Nippon Aerosil Co., Ltd., Shinjuku-ku, Tokyo 163-0913 (JP); SUZUKI, Shigeru, c/o Yokkaichi Plant, Yokkaichi-shi, Mie 510-0841 (JP); PAUL, Brandl, c/o Yokkaichi Plant, Yokkaichi-shi, Mie 510-0841 (JP)
(74) Representative: HOFFMANN EITLE
(86) International application number: PCT/JP2003/016806
(87) International publication number: WO 2004/062008

(57) **Abstract**

An inorganic oxide powder used for a gelled electrolyte of a battery, in which an average primary particle size is from 5 nm to 40 nm and an existence probability of an agglomeration being more than 100µm is less than 1 %, and preferably, the hydrophobicity is more than 50 %. It is preferable that said inorganic oxide powder is a silica powder, an alumina powder, a titania powder or these mixed powder. A gel composition containing said inorganic oxide powder has a thixotropic index of more than 6.0, and preferably has the dynamic elastic modulus D30 of more than 10000 [Pa] at the time of containing more than 30wt % of said inorganic oxide powder. By using said gel composition, it is possible to obtain the gelled electrolyte for a battery having excellent workability and shape retainability.

## Description

### [Background of the Invention]

### [Field of the invention]

The present invention relates to an inorganic oxide powder used for a gelled electrolyte of a battery, in which a gelled electrolyte having excellent workability and shape retainability can be obtained at the time of adding to an electrolyte.

### [Description of the Prior Art]

It has been known that a mechanical strength and an ion conductivity of the electrolyte can be increased by adding the inorganic oxide powder, such as silica, alumina, titania or the like, to the electrolyte in a lithium ion polymer battery or the like, as a gelling agent. For example, it has been known that an inorganic filler, such as silica or the like, is added to the lithium ion electrolyte to increase the mechanical strength, and also increase an impregnation amount of electrolysis liquid because of not using a plasticizing agent. (Japanese Patent Laid Open No. 167796-2001) Further, it has been also known that the gelled electrolyte having a chemical stability can be obtained from the electrolyte containing fluorine by using a hydrophobic inorganic oxide powder and this hydrophobic inorganic oxide powder has the higher gelling effect than that of the hydrophilic inorganic oxide powder to reduce the danger of liquid leakage. Therefore, the battery having excellent battery characteristics, such as a load characteristic and a low-temperature characteristic, can be obtained. (Japanese Patent Laid Open No. 229966-2001)

When the silica powder or the like is added to the electrolyte to gel and to increase its mechanical strength, it is necessary to add about more than 25 % of said powder in order to obtain the sufficient mechanical strength. However, the silica powder or the like, which is carried out the hydrophobic treatment, has an agglomerated form. So, when said silica powder or the like is added to a dispersion medium used for the electrolyte, such as propylene carbonate or the like, said silica powder has not compatibility with the dispersion medium, thus it is difficult to add about more than 25 %. Further, conventionally, since a thixotropic index (it is also called as a thixo index) of the electrolyte for the battery, which is added with the silica powder or the like as the gelling agent, is low, there are problems that the workability and the shape retainability are low.

### [Summary of the Invention]

The present invention provides the inorganic oxide powder capable of obtaining the gelled electrolyte, in which the thixo index is high and the dynamic elastic modulus of the electrolyte is remarkably increased as compared with the gelled electrolyte added with the conventional inorganic oxide powder. Further, the present invention also provides a gel composition containing said inorganic oxide powder.

That is, according to the present invention, the inorganic oxide powder used for the gelled electrolyte of the battery and the gel composition, which comprise the following constitutions, are provided.
[1] An inorganic oxide powder used for a gelled electrolyte of a battery,
   wherein the average primary particle size is from 5 nm to 40 nm, and the existence probability of an agglomeration being more than 100µm is less than 1 %.
[2] The inorganic oxide powder according to Claim 1, which is a hydrophobic powder being carried out a pulverizing treatment simultaneously with or after a hydrophobic treatment,
   wherein the hydrophobicity is more than 50 %, the average primary particle size is from 5 nm to 40 nm, and the existence probability of the agglomeration being more than 100µm is less than 1 %.
[3] The inorganic oxide powder according to any one of above [1] and [2],
   wherein the inorganic oxide powder is a silica powder, an aluminum powder, a titania powder or these mixed powder.
[4] A gel composition,
   wherein the inorganic oxide powder according to any one of from above [1] to [3] is contained, and a thixotropic index is more than 6.0.
[5] The gel composition,
   wherein more than 30wt % of the inorganic oxide powder according to any one of from above [1] to [3] is contained, and the dynamic elastic modulus D30 is more than 10000 [Pa].
[6] The gel composition according to any one of above [4] and [5],
wherein said gel composition is used for a battery.

### [Detailed explanation of the Invention]

Hereinafter, the present invention is explained more concretely. In addition, % is the wt % unless it is shown especially.
The inorganic oxide powder of the present invention is the inorganic oxide powder used for the gelled electrolyte of the battery, in which the average primary particle size is from 5 nm to 40 nm and the existence probability of the agglomeration being more than 100µm is less than 1 %. Further, it is preferable that said powder is the inorganic fine oxide powder, which is the hydrophobic silica, alumina, titania powders or these mixed powder being carried out the pulverizing treatment after the hydrophobic treatment, and has the hydrophobicity of more than 50 %.

As the inorganic oxide powder of the present invention, silica, alumina, titania or the like can be used, and the powder synthesized by a vapor phase method is more preferably. In these powders, for example, the silica powder synthesized by the vapor phase method is an amorphous fine silica particle produced by introducing a gaseous silicon compound, such as silicon tetrachloride, trichlorosilane, dichlorosilane, methyltrichlorosilane or the like, into a flame having the temperature of more than a melting point of silica, and hydrolyzing it.

It is preferable that the inorganic oxide powder, such as the silica powder or the like, is the powder carried out the hydrophobic treatment. As the hydrophobic agent, a silane coupling agent, a silicone oil, a silazane or the like can be used, and a mixture of one or more than two kinds of these hydrophobic agents can be also used. As for the method of the hydrophobic treatment, for example, the hydrophobic fine silica powder can be obtained by a dry process, i.e. taking the fine powder into the container having a stirring equipment, stirring under a nitrogen atmosphere, dropping or spraying only the hydrophobic agent or the hydrophobic agent together with the control agent of the electric charge and the solvent if necessary, or heating and vaporizing the hydrophobic agent to disperse enough with the fine powder, and after these treatments, heating and cooling the treated fine powder. It is available that the hydrophobic treatment is a wet process. More concretely, for example, the fine silica powder is dispersed in a solvent to be added with the hydrophobic agent or the like, and after reacting, said fine silica powder is dried. In addition, since the silica fine particle is easily agglomerated by the wet hydrophobic treatment, the dry hydrophobic treatment is preferable.

It is preferable that the inorganic oxide powder of the present invention is the powder obtained by carrying out the hydrophobic treatment of the inorganic oxide powder, such as silica or the like, and carrying out the pulverizing treatment further. As the pulverizing treatment, any means, such as a mechanical crushing, a compression, a milling pulverization or the like, can be used. Moreover, it is available that the pulverizing treatment is carried out simultaneously with the hydrophobic treatment. Since the silica powder being carried out the surface treatment, such as the hydrophobic treatment, has the agglomerated form in general, the agglomeration is pulverized simultaneously with or after the hydrophobic treatment, thus it is possible to obtain the powder having the good compatibility with the dispersion medium of the electrolyte and the excellent dispersibility. It is available that the method and conditions of the pulverizing treatment are defined corresponding to the kind of the inorganic oxide powder, the state of the hydrophobic treatment or the like.

The inorganic oxide powder of the present invention is the fine powder having less agglomerations by carrying out the pulverizing treatment, when the above-described hydrophobic treatment is carried out. More concretely, said inorganic oxide powder is the fine powder, in which the average primary particle size is from 5 nm to 40 nm and the existence probability of the agglomeration being more than 100µm is less than 1 %. As for the silica having the average primary particle size of less than 5 nm, it is difficult to be dispersed since the agglomeration is too strong, and cannot demonstrate the sufficient ability, thus it is not preferable. On the other hand, if the average primary particle size is more than 40 nm, although the powder is easily dispersed, the improvements of a thickening effect and a mechanical property are remarkably decreased, thus it is also not preferable.

The existence probability of the agglomeration can be measured, based on a particle size distribution by a laser - analyzing particle size distribution. For example, 3 % of the inorganic oxide powder is dispersed in ethanol by a dissolver or the like to measure the particle size distribution by the laser-analyzing particle size distribution. In the case of the silica having many agglomerated particles, the particle having its size of more than 100µ m is observed. However, when there are less agglomerations, the particle being more than 100µm is hardly existed. The inorganic oxide powder of the present invention is the powder, in which the existence probability of the agglomeration being more than 100 µm, which is measured by the above-described method, is less than 1 %. It is in the tendency that the inorganic oxide powder, in which the existence probability of the agglomeration being more than 100µm is more than 1 %, is easily thickened. Thus, when said inorganic oxide powder is added to the electrolyte to form the gelled electrolyte, it is difficult to add more than 25 % of said powder.

Further, it is preferable that the inorganic oxide powder of the present invention is the powder having the hydrophobicity of more than 50 %. By having such hydrophobicity, the adsorption of moisture to the inorganic oxide powder can be prevented, thus the mixing of moisture into the mixture, such as the electrolyte, can be prevented.

By adding the inorganic oxide powder of the present invention to an organic solvent (the dispersion medium), the gel composition can be obtained. This gel composition contains the above-described inorganic oxide powder having the average primary particle size of from 5 nm to 40 nm, the existence probability of the agglomeration being more than 100µm of less than 1 %, and the hydrophobicity of more than 50 % preferably. Further, the gel composition preferably has the thixotropic index (thixo index) of more than 6.0. More concretely, as shown in examples, the gel composition, in which 25 to 30 % of the silica powder having the above-described particle conditions is added to the propylene carbonate, has the high thixo index of more than 6.2 in all additional amount , wherein the thixo index is shown with the ratio [X5 / X40] of a dynamic viscosity at a rotational speed of 40 rpm [X40] and that at the rotational speed of 5 rpm [X5].

Further, the gel composition of the present invention is the composition, in which the dynamic elastic modulus D30 is more than 10000 [Pa], for example, at the time of containing 30wt % of the above-described inorganic oxide powder. More concretely, as shown in examples, the dynamic elastic modulus D30 of the gel composition, in which 30wt % of the fine silica powder having the above - described particle conditions is added to the propylene carbonate, is 19590 [Pa], thus said gel composition has the remarkably high dynamic elastic modulus.

As for the organic solvent used for the gel composition, propylene carbonate, ethylene carbonate, methyl-ethyl carbonate, diethyl carbonate or the like can be used, and the propylene carbonate is preferably used. However, said organic solvent is not limited to these solvents, and these solvents may be used independently or by mixing more than two kinds of those.

By mixing the above-described gel composition with the electrolyte, the gelled electrolyte can be obtained. As for the electrolyte used for the gelled electrolyte, either an inorganic electrolyte or an organic electrolyte can be used, and, for example, a lithium salt, such as LiPF₆, LiClO₄, LiBF₄, Li₂SiF₆, LiN (SO₂CF₂CF₃) or the like, is preferably used. However, said electrolyte is not limited to these lithium salts, and these electrolytes can be used independently or by mixing more than two kinds of them.

### [Effectiveness of the Invention]

As described above, the inorganic oxide powder of the present invention is the powder, in which the average primary particle size is from 5 nm to 40 nm and the existence probability of the agglomeration being more than 100µm is less than 1 %. It is preferable that said inorganic oxide powder is the powder having the hydrophobicity of more than 50 %, in which the average primary particle size and the existence probability of the agglomeration are made into the above-described range by carrying out the hydrophobic treatment and the pulverizing treatment. When the inorganic oxide powder of the present invention is added to the battery electrolyte, much amounts of said powder can be added since said powder has the compatibility with the dispersion medium, and the workability is good since the thixo index becomes high, and further, the shape retainability is excellent since the dynamic elastic modulus is remarkably increased. That is, in the case that said inorganic oxide powder is used as the gelling agent to the electrolyte, such as the lithium battery, since the additional amount of said powder can be remarkably increased, the solidity of the gelled electrolyte can be increased, and its mechanical strength can be remarkably increased. Thus, it is possible to obtain the electrolyte, in which the shape retainability is high and there is no liquid leakage. Further, it is possible to obtain the gelled electrolyte having the excellent moldability or workability since having the high thixo index.

More concretely, for example, to the propylene carbonate, the additional amount of the hydrophobic silica powder can be increased to 30wt %. By this way, since the additional amount of the hydrophobic silica powder can be increased, the dynamic elastic modulus can be increased to 20,000 to more than 60,000 by increasing the additional amount of said powder to 30 to 35wt %, wherein the dynamic elastic modulus is about 5300 [Pa] when the additional amount of the hydrophobic silica powder of about 25 %.

### [Detailed Description of the Preferred Embodiments]

Hereinafter, the present invention will be explained concretely as follows with examples and comparison examples. In addition, as for the gel composition added with the silica powder, the dynamic viscosity at the rotational speed of 40 rpm (40/s viscosity), the dynamic viscosity at the rotational speed of 5 rpm (5/s viscosity), and the dynamic elastic modulus G [Pa] were measured by using a rotary viscometer. The dynamic viscosity showed the size of its internal resistance at the time of adding the power. Therefore, when this value is too large, the trouble in the work at the time of molding or operating was caused. For example, the 40/s viscosity is so low that the gel composition is easily treated at the time of molding or operating, and the 5/s viscosity is so high that the gel composition has the high shape retainability after molding. The thixo index was shown with the ratio of those viscosities (40/s viscosity : 5/s viscosity), and the thixo index was so high that the workability and the shape retainability are good. Moreover, the dynamic elastic modulus could be measured by a commercial rheometer (for example, RS150 produced by HAAKE Co., Ltd.). The dynamic elastic modulus showed the size of the solidly element, and it means that the value of the dynamic elastic modulus is so high that the solidity is high, thus the shape is not easily lost even when added with the outside power after molding, and the liquid is not easily leaked in the gelled electrolyte.

### Example

The hydrophobic silica powder A having the particle conditions shown in Table 1 was prepared by using a fumed silica (the product name was Aerosil R972 produced by Nippon Aerosil Co. Ltd) being carried out the hydrophobic treatment, and carrying out the pulverizing treatment of said fumed silica after the hydrophobic treatment. The prepared hydrophobic silica powder A was added to the propylene carbonate to measure the 40/s viscosity, the 5/s viscosity and the thixo index, and the dynamic elastic modulus under the stress of 1 [Pa] was also measured. On the other hand, the silica powder B being not carried out the pulverizing treatment after the hydrophobic treatment was tested like the silica powder A. These results were shown in Table 1 with the additional amounts and the thixo indexes.

As shown in Table 1, since the hydrophobic silica powder B being not carried out the pulverizing treatment of comparison example did not have the compatibility with the dispersion medium, 30wt % of said powder B cannot be added. When 25 % of the silica powder B was added, the 40/s viscosity was 95 [Pa·s], the 5/s viscosity was 295 [P·s], the thixo index was 3.1, and the dynamic elastic modulus was 5343 [Pa]. On the other hand, since the hydrophobic silica powder A being carried out the pulverizing treatment of the present invention had the good compatibility with the dispersion medium, 35wt % of said powder A can be added. As the result, the 40/s viscosity was 78 [Pa·s], the 5/s viscosity was 589 [Pa·s], the thixo index was 7.5, and the dynamic elastic modulus was 63840 [Pa], thus the thixo index and the dynamic elastic modulus were remarkably increased. Further, the silica powder A of the present invention had the better compatibility with the dispersion medium than that of the silica powder B of comparison example. So, when 25wt % of the silica powder was added and dispersed, it took about 400 seconds for the silica B, but only about 50 seconds for the silica A. Further, at this time, the dynamic elastic modulus of the silica A and the silica B were the almost same, but the viscosity of the gel using the silica B was remarkably high, thus the silica B caused the trouble in the work at the time of molding or operating.

**[Table 1]**

| | Average Primary Particle Size | More than 100µm | Hydrophobicity | Additional Amount [wt %] | 40/s Viscosity [Pa·s] | 5/s Viscosity [Pa·s] | Thixo Index | Dynamic Elastic Modulus [Pa] |
|---|---|---|---|---|---|---|---|---|
| Hydrophobic silica A of the present invention | 7 nm | 0 % | 55 | 25 | 5.3 | 33 | 6.2 | 3867 |
| | 16 nm | 0 % | 53 | 30 | 13 | 80 | 6.2 | 19590 |
| | 40 nm | 0 % | 56 | 35 | 78 | 589 | 7.5 | 63840 |
| Not pulverized hydrophobic silica B | 16 nm | 28 % | 40 | 25 | 95 | 295 | 3.1 | 5343 |
| | 16 nm | 55 % | 30 | Can not be added to 30wt% | | | | |
| (Note) Additional Amount is an amount to 100 % of propylene carbonate. Silica powder A is a powder of the present invention. Silica powder B is a powder of comparison example. | | | | | | | | |

### [Industrial applicability]

When the inorganic oxide powder of the present invention is used as the gelling agent to the electrolyte, the additional amount of said powder can be remarkably increased, thus the solidity of the gelled electrolyte can be increased, and the mechanical strength can be remarkably increased. Therefore, it is possible to obtain the electrolyte, in which the shape retainability is high and there is no liquid leakage. Further, it is possible to obtain the gelled electrolyte having the excellent moldability or workability since having the high thixo index.

## Claims

1. An inorganic oxide powder used for a gelled electrolyte of a battery,
wherein the average primary particle size is from 5 nm to 40 nm, and the existence probability of an agglomeration being more than 100µm is less than 1 %.

2. The inorganic oxide powder according to Claim 1, which is a hydrophobic powder being carried out a pulverizing treatment simultaneously with or after a hydrophobic treatment,
wherein the hydrophobicity is more than 50 %, the average primary particle size is from 5 nm to 40 nm, and the existence probability of the agglomeration being more than 100µm is less than 1 %.

3. The inorganic oxide powder according to any one of Claim 1 and Claim 2,
wherein the inorganic oxide powder is a silica powder, an alumina powder, a titania powder or these mixed powder.

4. A gel composition,
wherein the inorganic oxide powder according to any one of from above [1] to [3] is contained, and a thixotropic index is more than 6.0.

5. The gel composition,
wherein more than 30wt % of the inorganic oxide powder according to any one of from Claim 1 to Claim 3 is contained, and the dynamic elastic modulus D30 is more than 10000 [Pa].

6. The gel composition according to any one of Claim 4 and Claim 5,
wherein said gel composition is used for a battery.
